# EUROPÄISCHE PATENTANMELDUNG

(11) **EP 4 730 643 A1**
(43) Veröffentlichungstag der Anmeldung: **22.04.2026**
(21) Anmeldenummer: 25202762.8
(22) Anmeldetag: 17.09.2025
(51) Int. Cl.: H02S 20/24, F24S 25/11, F24S 25/70

(54) **TRAGBLOCK EINER UNTERKONSTRUKTION FÜR EIN SOLARMODUL**

(30) Priorität: 15.10.2024 AT 508302024
(71) Anmelder: Kirchdorfer Fertigteilholding GmbH, 2752 Wöllersdorf (AT)
(72) Erfinder: PUSNIK, Christian, 2752 Wöllersdorf (AT)
(74) Vertreter: Gibler & Poth Patentanwälte KG

(57) **Zusammenfassung**

Es wird ein Tragblock (1) einer Unterkonstruktion für ein Solarmodul (2), umfassend
- eine erste im Wesentlichen ebene Aufstandsfläche (3) an einer Unterseite (4),
- eine erste im Wesentlichen ebene Abstützfläche (7) und eine zweite im Wesentlichen ebene Abstützfläche (8) an einer Oberseite (9), wobei die zweite Abstützfläche (8) parallel zu der ersten Aufstandsfläche (3) ist, wobei die erste Abstützfläche (7) um einen ersten Winkel (α) gegenüber der ersten Aufstandsfläche (3) abgewinkelt ist,
- eine zweite im Wesentlichen ebene Aufstandsfläche (10) an einer ersten Querseite (11) des Tragblocks (1),
- eine dritte im Wesentlichen ebene Abstützfläche (13) an einer zweiten Querseite (14), wobei die dritte Abstützfläche (13) um einen zweiten Winkel (β) gegenüber der zweiten Aufstandsfläche (10) abgewinkelt ist,
wobei der erste Winkel (α) im Wesentlichen gleich groß wie der zweite Winkel (β) ist, vorgeschlagen.

## Beschreibung

Die Erfindung betrifft einen Tragblock einer Unterkonstruktion für ein Solarmodul gemäß dem Patentanspruch 1.

Es ist bekannt, dass Solarmodule zur Stromerzeugung mittels einer Unterkonstruktion auf einem Untergrund aufgestellt werden. Vor allem in letzter Zeit nimmt die Energiegewinnung aus erneuerbaren Energien stetig zu, wobei freie Flächen auf Dächern von Wohnbauten, also Gebäuden in denen Menschen wohnen, oder von Produktionshallen zum Aufstellen von Solarmodulen genutzt werden.

Die Solarmodule werden für gewöhnlich an einer Unterkonstruktion befestigt, sodass sie vor einer Verschiebung durch Windeinfluss geschützt sind. Bekannte Unterkonstruktion sind dabei Unterkonstruktionen aus Aluminium, welche häufig fest mit dem Untergrund, insbesondere mit dem Gebäudedach, verbunden oder in dem Untergrund, insbesondere an dem Gebäudedach, verankert sind. Dadurch soll eine hinreichend starke Befestigung des Solarmoduls vor den Windeinflüssen sichergestellt werden. Weiters sind auch Aluminiumkonstruktionen als Unterkonstruktionen bekannt, welche ohne Befestigung mit dem Untergrund, insbesondere mit dem Gebäudedach auskommen, also schwimmend aufgestellt sind. Diese sind jedoch für gewöhnlich mittels Gewichte zusätzlich ballastiert.

Nachteilig daran ist, dass das Aufstellen der Solarmodule zeitaufwändig ist, da zuerst eine Unterkonstruktion auf dem Aufstellort der Solarmodule aufgebaut werden muss und erst anschließend die Solarmodule an der Unterkonstruktion befestigt werden können. Weiters ist es dabei erforderlich die Unterkonstruktion an die zu verwendeten Solarmodule anzupassen, sodass bei der Auswahl der Solarmodule auch häufig bereits die Auswahl der benötigten Unterkonstruktion getroffen werden muss. Dadurch können Probleme bei einem Austausch der Solarmodule in Zukunft aufgrund der verwendeten Unterkonstruktion auftreten sowie wird der Aufbau der Solarmodule auf Dächern oder einem anderen Untergrund erschwert.

Aufgabe der Erfindung ist es daher einen Tragblock einer Unterkonstruktion für ein Solarmodul der eingangs genannten Art anzugeben, mit welchem die genannten Nachteile vermieden werden können, mit welchem das Aufstellen von Solarmodulen erleichtert werden kann.

Erfindungsgemäß wird dies durch die Merkmale des Patentanspruches 1 erreicht.

Dadurch ergibt sich der Vorteil, dass ein Tragblock in einer hohen Stückzahl vorgefertigt werden kann, welcher sich zu einer Befestigung von Solarmodulen auf einer im Wesentlichen horizontalen Ebene, wie beispielsweise auf einem Flachdach, sowie zu einer Befestigung der Solarmodule auf einer im Wesentlichen schiefen Ebene, wie beispielsweise auf einem flachgeneigten Dach, eignet. Durch die unterschiedlichen Aufstandsflächen und Abstützflächen werden verschiedene Befestigungsmöglichkeiten bzw. Anordnungen für das Solarmodul an dem Tragblock ausgebildet. Dadurch kann der Tragblock für viele gängige Solarmodulgrößen verwendet werden, wodurch lediglich eine Form des Tragblocks produziert und zu dem Aufstellort der Solarmodule gebracht werden muss. Dadurch braucht der Tragblock lediglich zu dem Aufstellort des Solarmoduls befördert werden, dort auf dem Boden oder auf dem Dach eines Gebäudes im dem gewünschten Aufstellzustand aufgestellt und anschließend ein Solarmodul an dem Tragblock, insbesondere an den Tragblöcken, zumindest mittelbar befestigt werden. Zusammengefasst kann dadurch ein Tragblock geschaffen werden, welcher sich zu einer multifunktionalen Befestigung von unterschiedlich großen Solarmodulen eignet.

Die Erfindung betrifft weiters einen Solarmodulaufbau gemäß dem Patentanspruch 15.

Erfindungsgemäß wird dies durch die Merkmale des Patentanspruches 15 erreicht.

Die Vorteile des Solarmodulaufbaus entsprechen den Vorteilen des oben genannten Tragblocks.

Die Unteransprüche betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine bevorzugte Ausführungsform des Tragblocks in axonometrischer Ansicht,
Fig. 2 die in Fig. 1 gezeigte bevorzugte Ausführungsform des Tragblocks in Draufsicht,
Fig. 3 die in Fig. 1 gezeigte bevorzugte Ausführungsform des Tragblocks in Vorderansicht,
Fig. 4 die in Fig. 1 gezeigte bevorzugte Ausführungsform des Tragblocks in Rückansicht,
Fig. 5 die in Fig. 1 gezeigte bevorzugte Ausführungsform des Tragblocks in Seitenansicht von links,
Fig. 6 die in Fig. 1 gezeigte bevorzugte Ausführungsform des Tragblocks in Seitenansicht von rechts,
Fig. 7 eine Seitenansicht der in Fig. 1 gezeigten bevorzugten Ausführungsform des Tragblocks in einem ersten Aufstellzustand,
Fig. 8 eine Seitenansicht der in Fig. 1 gezeigten bevorzugten Ausführungsform des Tragblocks in einem zweiten Aufstellzustand,
Fig. 9 eine Seitenansicht der in Fig. 1 gezeigten bevorzugten Ausführungsform des Tragblocks in einem dritten Aufstellzustand,
Fig. 10 eine Seitenansicht einer bevorzugten Ausführungsform eines Solarmodulaufbaus auf einer horizontalen Ebene mit zwei in Fig. 1 gezeigten Tragblöcken im ersten Aufstellzustand sowie ein an den Tragblöcken befestigtes Solarmodul,
Fig. 11 eine Seitenansicht einer bevorzugten Ausführungsform eines Solarmodulaufbaus auf einer horizontalen Ebene mit einem in Fig. 1 gezeigten Tragblock im ersten Aufstellzustand und einem in Fig. 1 gezeigten Tragblock im zweiten Aufstellzustand sowie ein an den Tragblöcken befestigtes Solarmodul,
Fig. 12 eine Seitenansicht einer bevorzugten Ausführungsform eines Solarmodulaufbaus auf einer horizontalen Ebene mit einem in Fig. 1 gezeigten Tragblock im ersten Aufstellzustand und einem in Fig. 1 gezeigten Tragblock im dritten Aufstellzustand sowie ein an den Tragblöcken befestigtes Solarmodul,
Fig. 13 eine Seitenansicht einer bevorzugten Ausführungsform eines Solarmodulaufbaus auf einer schiefen Ebene mit zwei in Fig. 1 gezeigten Tragblöcken im ersten Aufstellzustand sowie ein mittels Abstandshalter an den Tragblöcken befestigtes Solarmodul,

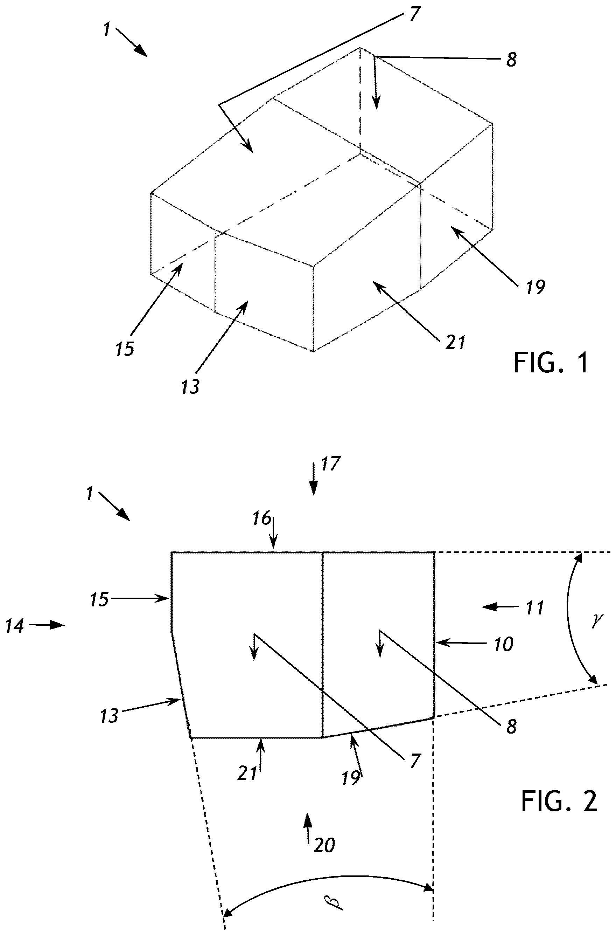

Die Fig. 1 bis 13 zeigen zumindest Teile einer bevorzugten Ausführungsform eines Tragblocks 1 einer Unterkonstruktion für ein Solarmodul 2, umfassend
- eine erste im Wesentlichen ebene Aufstandsfläche 3 an einer Unterseite 4 des Tragblocks 1, wobei die erste Aufstandsfläche 3 in einem ersten Aufstellzustand 5 des Tragblocks 1 zumindest teilweise auf einer Ebene 6 aufliegbar ist,
- eine erste im Wesentlichen ebene Abstützfläche 7 und eine zweite im Wesentlichen ebene Abstützfläche 8 an einer der Unterseite 4 gegenüberliegend und beabstandet zu der Unterseite 4 angeordneten Oberseite 9 des Tragblocks 1 zum Befestigen des Solarmoduls 2 in einer ersten Anordnung an der ersten Abstützfläche 7 oder in einer zweiten Anordnung an der zweiten Abstützfläche 8, wobei die zweite Abstützfläche 8 parallel zu der ersten Aufstandsfläche 3 ist, wobei die erste Abstützfläche 7 um einen ersten Winkel α gegenüber der ersten Aufstandsfläche 3 abgewinkelt ist,
- eine zweite im Wesentlichen ebene Aufstandsfläche 10 an einer ersten von vier Querseiten 11 des Tragblocks 1, wobei die zweite Aufstandsfläche 10 in einem zweiten Aufstellzustand 12 des Tragblocks 1 zumindest teilweise auf der Ebene 6 aufliegbar ist,
- eine dritte im Wesentlichen ebene Abstützfläche 13 an einer der ersten Querseite 11 gegenüberliegenden und beabstandet zu der ersten Querseite 11 angeordneten zweiten Querseite 14 der vier Querseiten des Tragblocks 1 zum Befestigen des Solarmoduls 2 in einer dritten Anordnung an der dritten Abstützfläche 13, wobei die dritte Abstützfläche 13 um einen zweiten Winkel β gegenüber der zweiten Aufstandsfläche 10 abgewinkelt ist,
wobei der erste Winkel α im Wesentlichen gleich groß wie der zweite Winkel β ist.

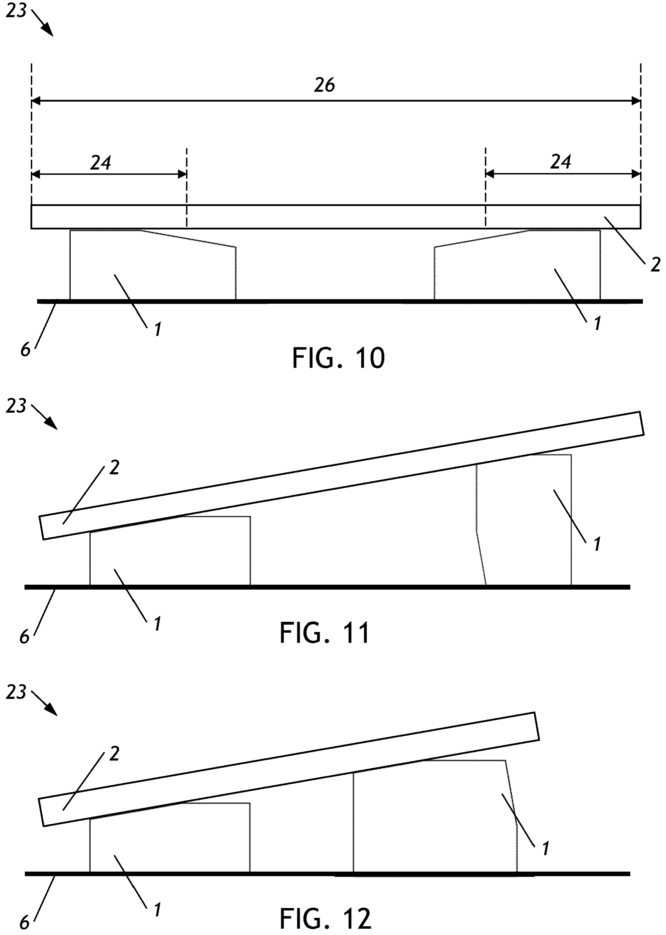

Weiters zeigen die Fig. 10 bis 13 zumindest Teile bevorzugter Ausführungsformen eines Solarmodulaufbaus 23 umfassend mindestens vier erfindungsgemäße Tragblöcke 1 und wenigstens ein Solarmodul 2, wobei das wenigstens eine Solarmodul 2 zumindest mittelbar an den mindestens vier Tragblöcke 1 befestigt ist.

Dadurch ergibt sich der Vorteil, dass der Tragblock 1 in einer hohen Stückzahl vorgefertigt werden kann und sich zu einer Befestigung von Solarmodulen 2 auf einer im Wesentlichen horizontalen Ebene 6, wie beispielsweise auf einem Flachdach, sowie zu einer Befestigung der Solarmodule 2 auf einer im Wesentlichen schiefen Ebene 6, wie beispielsweise auf einem flachgeneigten Dach, eignet. Durch die unterschiedlichen Aufstandsflächen 3, 10 und Abstützflächen 7, 8, 13 werden verschiedene Befestigungsmöglichkeiten bzw. Anordnungen für das Solarmodul 2 an dem Tragblock 1 ausgebildet. Dadurch kann der Tragblock 1 für viele gängige Solarmodulgrößen verwendet werden, wodurch lediglich eine Form des Tragblocks 1 produziert und zu dem Aufstellort der Solarmodule 2 gebracht werden muss. Dadurch braucht der Tragblock 1 lediglich zu dem Aufstellort des Solarmoduls 2 befördert werden, dort auf dem Boden oder auf dem Dach eines Gebäudes im dem gewünschten Aufstellzustand 5, 12 aufgestellt und anschließend ein Solarmodul 2 an dem Tragblock 1, insbesondere an den Tragblöcken 1, zumindest mittelbar befestigt werden. Zusammengefasst kann dadurch ein Tragblock 1 geschaffen werden, welcher sich zu einer multifunktionalen Befestigung von unterschiedlich großen Solarmodulen 2 eignet.

Der Tragblock 1 ist ein Bauteil, welches dazu ausgebildet ist ein Solarmodul 2 abzustützen. Der Tragblock 1 ist zum Abstützen des Solarmoduls 2 geeignet. Das Abstützen des Solarmoduls 2 heißt bevorzugt, dass der Tragblock 1 die benötigte Festigkeit aufweist, dass auch über einen längeren Zeitraum, insbesondere Jahre, der Tragblock 1 nicht unter dem Gewicht des Solarmoduls 2 deformiert oder beschädigt wird. Von dem Solarmodul 2 wird dabei eine Kraft auf den Tragblock 1 ausgeübt, wobei der Tragblock 1 die Kraft aufnehmen kann. Ein an dem Tragblock 1 befestigtes Solarmodul 2 wird dabei ebenfalls abgestützt. Abstützen ist in diesem Kontext also nicht auf das Auflegen des Solarmoduls 2 auf den Tragblock 1 beschränkt.

Der Tragblock 1 ist dazu ausgebildet, insbesondere mehrere Tragblöcke 1 gemeinsam, eine Unterkonstruktion für das wenigste eine Solarmodul 2 auszubilden. Mehrere Tragblöcke gemeinsam, insbesondere vier Tragblöcke 1, bilden bevorzugt die Unterkonstruktion für wenigstens ein, bevorzugt ein einzelnes, Solarmodul 2 auf.

Die wenigstens vier Tragblöcke 1 können auf dem Untergrund in der Form der Eckpunkte eines Rechteckes aufgestellt werden.

Dabei kann bevorzugt vorgesehen sein, dass an jeweils einer Ecke des Solarmoduls 2 ein Tragblock 1 angeordnet wird, wobei der Tragblock 1 mit dem Solarmodul 2 an der Ecke des Solarmoduls 2 zumindest mittelbar befestigt wird.

Insbesondere kann vorgesehen sein, dass die mindestens vier Tragblöcke 1 voneinander beabstandet angeordnet sind, wobei jeweils zwei Trageblöcke 1 als Paar derart angeordnet sind, dass von jedem der Tragblöcken 1 eine der Abstützflächen 7, 8, 13, 15, 19, 21 eine gemeinsame Ebene Aufstellen.

Insbesondere kann vorgesehen sein, dass bei dem Paar an Tragblöcken 1 ein erster Trageblock 1 in dem ersten Aufstellzustand 5 aufgestellt ist, und der zweite Trageblock 1 wahlweise in dem ersten Aufstellzustand 5, dem zweiten Aufstellzustand 12 oder dem dritten Aufstellzustand 18 aufgestellt ist.

Die zumindest mittelbare Befestigung des Solarmoduls 2 an dem Tragblock 1 kann auf unterschiedliche Arten und Weisen erfolgen, beispielsweise mittels Schrauben, Bolzen und/oder Verklebungen. Bevorzugt kann auch eine Befestigungsvorrichtung zur Befestigung des Solarmoduls 2 an dem Tragblock 1 vorgesehen werden. Bevorzugt kann die Befestigungsvorrichtung wie eine Art Klammer an dem Endbereich 24 des Solarmoduls 2 geklippt werden und anschließend die Klammer mit dem Tragblock 1 befestigt werden. Weiters kann das Solarmodul 2 bevorzugt Bohrlöcher umfassen, wobei das Solarmodul 2 mittels Schrauben an dem Tragblock 1 über die Bohrlöcher befestigt wird.

Bevorzugt kann das wenigstens eine Solarmodul 2 unmittelbar mit den Tragblöcken 1 befestigt sein.

Es kann auch vorgesehen sein, dass das wenigstens eine Solarmodul 2 mittelbar über eine Zwischenkonstruktion mit den Tragblöcken 1 befestigt ist. Hierbei kann insbesondere das wenigstens eine Solarmodul 2 an der Zwischenkonstruktion befestigt sein, wobei die Zwischenkonstruktion an den Tragblöcken 1 befestigt ist. Die Zwischenkonstruktion kann insbesondere umfassend Formrohre ausgebildet werden, wobei die Formrohre bevorzugt einen Halterahmen für das wenigstens eine Solarmodul 2 ausbilden. Die Zwischenkonstruktion kann insbesondere flach und eben ausgebildet sein, im Sinne das die Zwischenkonstruktion im Wesentlichen in einer Ebene angeordnet ist. Die Formrohre können insbesondere aus Metall, bevorzugt Aluminium, ausgebildet sein. Dadurch können die Tragblöcke 1 in frei wählbaren Abständen aufgestellt werden und die Anordnung der Tragblöcke 1 ist nicht durch die Maße der Solarmodule 2 vorgegeben. Dies kann besonders vorteilhaft sein, wenn es die Dachfläche durch Hindernisse nicht erlaubt, die Tragblöcke 1 in einem konstanten Abstand aufzustellen, oder die erforderliche Ballastierung der Gesamtkonstruktion es erfordert, die Tragblöcke 1 in engeren Abstand aufzustellen, um mehr Gewicht zu erzielen.

Der Tragblock 1 ist ein blockförmiges Bauteil, insbesondere ein kompakter, kantiger Block aus hartem Material. Ein hartes Material ist ein Material, welches unter dem Gewicht des Solarmoduls 2 nicht Wesentlich deformiert wird.

Der Tragblock 1 ist bevorzugt ein vorgefertigtes Bauteil.

Besonders bevorzugt kann vorgesehen sein, dass der Tragblock 1 einstückig ausgebildet ist. Dadurch kann das Aufstellen des Tragblockes 1 auf dem Untergrund, insbesondere auf dem Dach, und die Vorfertigung des Produkts erleichtert werden. Dadurch muss lediglich ein Bauteil vorgefertigt werden und zu dem Aufstellungsort des Solarmoduls 2 transportiert werden.

Besonders bevorzugt kann vorgesehen sein, dass der Tragblock 1 im Wesentlichen quaderförmig ausgebildet ist. Dadurch kann die multifunktionale Befestigung der Solarmodule 2 zusätzlich unterstützt werden, da der Tragblock 1 durch die unterschiedlich langen Erstreckungen, als durch die unterschiedlichen Breiten und Längen des Tragblocks 1, der Tragblock 1 für unterschiedlich lange und breite Solarmodule 2 geeignet ist.

Besonders bevorzugt kann vorgesehen sein, dass der Tragblock 1 aus Beton ist. Dadurch kann eine einfache Fertigung des Tragblocks 1 beispielsweise in einer Schalung erreicht werden. Dadurch kann der Tragblock 1 einfach in einer großen Stückzahl gefertigt werden. Durch das Gewicht des Tragblocks 1 durch die Ausbildung als Beton kann die Widerstandsfähigkeit des Tragblocks 1 gegen Windeinflüsse zusätzlich reduziert werden, wodurch der Tragblock 1 auch nicht zusätzlich ballastiert werden muss.

Bevorzugt kann der Tragblock 1 Beton umfassen.

Bevorzugt kann der Tragblock 1 aus Beton bestehen.

Der Tragblock 1 ist dazu ausgebildet auf einem Untergrund aufgestellt zu werden, insbesondere mit einer der Aufstandsflächen 3, 10, 16. Der Untergrund kann bevorzugt ein Boden, wie beispielsweise ein Erdboden, ein Betonboden oder ein Schotterboden sein. Bevorzugt kann der Untergrund jedoch auch der Boden eines Daches sein. Dabei ist der Tragblock 1 dazu ausgebildet auf dem Dach eines Gebäudes aufgestellt zu werden. Beispielsweise kann das Dach des Gebäudes ein Flachdach oder ein flachgeneigtes Dach sein. Ein flachgeneigtes Dach ist ein Dach, welches üblicherweise eine Dachneigung von mindestens 3 Grad bis maximal 30 Grad aufweist. Das Dach ist das Dach eines Gebäudes für Menschen, in dem Menschen leben und/oder arbeiten können.

Der Tragblock 1 ist bevorzugt dazu ausgebildet, dass der Tragblock 1 schwimmend aufgestellt wird. Eine schwimmende Aufstellung bedeutet, dass der Tragblock 1 nicht mit dem Untergrund befestigt wird, also dass beispielsweise die Dachhaut nicht beschädigt werden muss, sofern der Tragblock 1 auf dem Dach des Gebäudes aufgestellt wird.

Das Solarmodul 2 kann auch als Photovoltaikmodul, PV-Modul, Solarpanel oder Solarpaneel bezeichnet werden. Das Solarmodul 2 ist eine Vorrichtung, welche Licht der Sonne direkt in elektrische Energie umwandelt. Das Solarmodul 2 umfasst dabei eine Mehrzahl an Solarzellen.

Bevorzugt kann das Solarmodul 2 starr ausgebildet sein. Das bedeutet, dass das Solarmodul 2 nicht Wesentlich gebogen oder gestreckt werden kann. Bei bekannten Ausführungen von starren Solarmodulen sind die Solarzellen zwischen Glasplatten eingebettet, wodurch die Solarzellen vor Umwelteinflüssen geschützt sind.

Alternativ kann das Solarmodul 2 auch flexibel ausgebildet sein.

Bevorzugt kann das Solarmodul mindestens 500 mm, vorzugsweise mindestens 600 mm, breit sein.

Bevorzugt kann das Solarmodul maximal 2000 mm, vorzugsweise maximal 1500 mm, breit sein.

Bevorzugt kann das Solarmodul 2 mindestens 1000 mm, vorzugsweise mindestens 1200 mm, lang sein.

Bevorzugt kann das Solarmodul 2 maximal 3000 mm, vorzugsweise maximal 2500 mm, lang sein.

Bekannte Solarmodule 2 variieren je nach Solarzellenanzahl und Anbieter am Markt. Ein bekanntes Standardmaß ist dabei 1130 mm breit und 1730 mm lang. Derzeit verfügbare Maße sind dabei zwischen mindestens 690 mm und maximal 1200 mm breit und zwischen mindestens 1500 mm und 1800 mm lang. In den Fig. 10 bis 13 ist beispielhaft die Länge der Solarmodule 26 ersichtlich.

Das Solarmodul 2 ist bevorzugt dazu ausgebildet Strom für das Gebäude, auf dem das Solarmodul 2 aufgestellt ist, zu produzieren.

Bevorzugt kann der Tragblock 1 wenigstens 10 kg, insbesondere wenigstens 15 kg, vorzugsweise wenigstens 20 kg, schwer sein.

Bevorzugt kann der Tragblock 1 maximal 35 kg, insbesondere maximal 30 kg, bevorzugt maximal 25 kg, schwer sein. Dadurch kann der Aufstellort des Tragblocks 1 einfach durch einen Arbeiter verändert werden. Dadurch lässt sich der Tragblock 1 auf dem Dach durch den Arbeiter beispielsweise einfach verschieben.

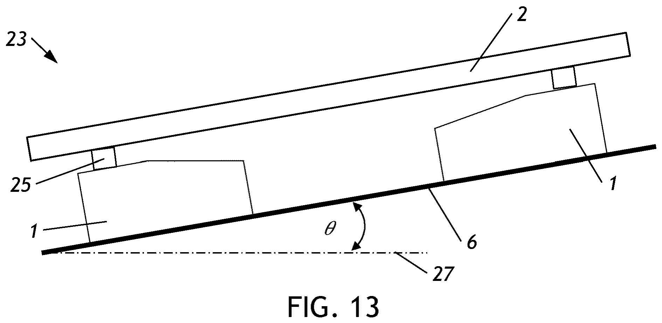

In den Fig. 10 bis 13 sind Seitenansichten von unterschiedlichen Solarmodulaufbauten 23 ersichtlich. Dabei zeigen die Fig. 10 bis 12 beispielhaft einen Solarmodulaufbau 23 auf einer horizontalen Ebene 6. Dieser Aufbau ist beispielsweise auf einem Flachdach möglich. Dem gegenüber zeigt Fig. 13 beispielhaft einen Solarmodulaufbau 23 auf einer geneigten Ebene 6. Die Ebene 6 ist dabei gegenüber einer horizontal gedachten weiteren Ebene 27 um den Winkel θ geneigt. Dieser Aufbau ist beispielsweise auf einem flachgeneigten Dach möglich. Wie allen Solarmodulaufbauten 23 gemein ist, ist ein Solarmodul 2 auf zwei Tragblöcken 1 abgestützt. Dadurch, dass eine Seitenansicht gezeigt ist, sind lediglich zwei Tragblöcke 1 anstatt vier Tragblöcke 1 ersichtlich.

Wie in Fig. 13 weiters ersichtlich ist, kann ein Abstandhalter 25 zwischen dem Solarmodul 2 und dem Tragblock 1 vorgesehen sein. Die Abstandhalter 25 können bevorzugt aus Kunststoff, Gummi oder einem anderen Material ausgebildet sein. Die Abstandhalter 25 können einer Abnutzung des Tragblocks 1 oder des Solarmoduls 2 entgegenwirken oder eine Dämpfung, insbesondere vor Windeinflüssen und dadurch hervorgerufener Schwingungen, für das Solarmodul 2 bewirken.

Bevorzugt kann der Endbereich des Solarmoduls 24 mindestens 100 mm, insbesondere mindestens 150 mm, bevorzugt mindestens 200 mm, lang sein. Die Länge des Endbereichs des Solarmoduls 24 erstreckt sich dabei entlang der Länge des Solarmoduls 2 von dem jeweiligen Ende des Solarmoduls 2 weg, also in Richtung des anderen Ende des Solarmoduls 2. Die Länge des Solarmoduls 26 ist die maximale Erstreckung des Solarmoduls 2 im Raum. Die Tragblöcke 1 sind jedoch nicht auf die Befestigung des Solarmoduls 2 im Hochformat beschränkt, sondern die Solarmodule 2 können auch im Querformat an den Tragblöcken 1 befestigt werden. Dabei erstreckt sich die Länge des Endbereichs des Solarmoduls 24 entlang der Breite des Solarmoduls 2 von dem jeweiligen Ende des Solarmoduls 2 weg.

Bevorzugt kann der Endbereich des Solarmoduls 24 maximal 400 mm, insbesondere maximal 350 mm, vorzugsweise maximal 300 mm, lang sein. In der Fig. 10 ist der Endbereich des Solarmoduls 24 beispielhaft gezeigt. Dadurch kann das Solarmodul 2 besonders satt an den Tragblöcken 1 befestigt werden, sodass sie beispielsweise vor Windeinflüssen geschützt sind.

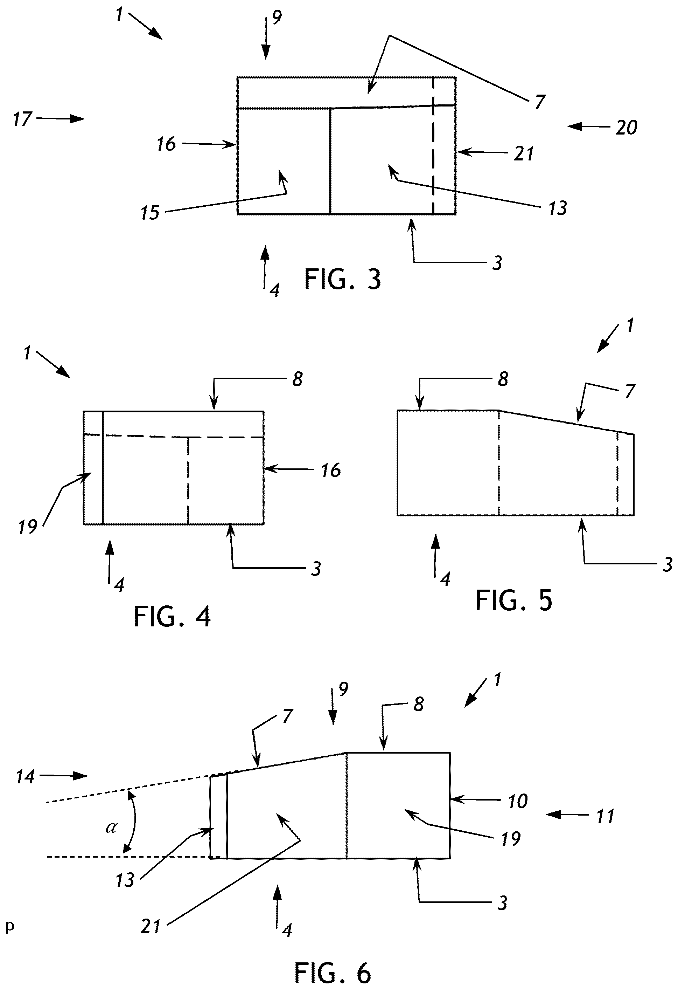

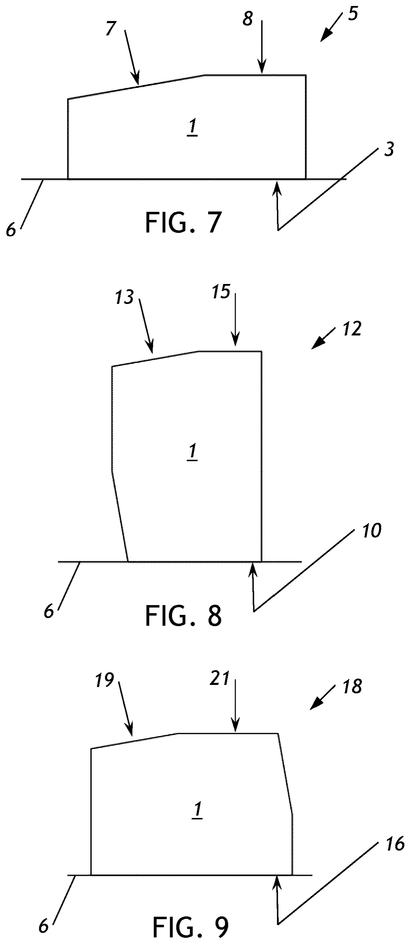

Der Tragblock 1 weist eine erste im Wesentlichen ebene Aufstandsfläche 3 auf. Die erste Aufstandsfläche 3 ist an einer Unterseite 4 des Tragblock 1 ausgebildet. Die Unterseite 4 ist in den Fig. 3 bis 6 beispielhaft gezeigt. In Fig. 7 ist der Tragblock 1 in dem ersten Aufstellzustand 5 gezeigt, wobei ersichtlich ist, dass der Tragblock 1 mit der ersten Aufstandsfläche 3 vollflächig auf der Ebene 6 aufliegt.

Je nachdem in welchem Aufstellzustand 5, 12 der Tragblock 1 angeordnet ist, kann die Unterseite 4 des Tragblocks 1 ausgerichtet sein. Die Unterseite 4 kann daher auch als erste Seite des Tragblocks 1 bezeichnet werden.

Bevorzugt kann an der Unterseite 4 des Tragblocks 1 lediglich die erste Aufstandsfläche 3 ausgebildet sein. Dies ist beispielhaft in den Fig. 3 bis 6 ersichtlich.

Bevorzugt kann der Tragblock 1 in dem ersten Aufstellzustand 5 vollflächig auf der ersten Aufstandsfläche 3 aufliegen. Dies ist beispielsweise in Fig. 7 ersichtlich. Die erste Aufstandsfläche 3 liegt dabei auf der ersten Ebene 6 auf.

Der Tragblock 1 weist die erste im Wesentlichen ebene Abstützfläche 7 auf. Die erste Abstützfläche 7 ist um den ersten Winkel α gegenüber der ersten Aufstandsfläche 3 abgewinkelt. Der erste Winkel α ist beispielhaft in der Fig. 6 ersichtlich, wobei die in Fig. 1 gezeigte bevorzugte Ausführungsform des Tragblocks 1 in Seitenansicht von rechts gezeigt ist.

Wie in Fig. 6 weiters ersichtlich ist, weist der Tragblock 1 die zweite im Wesentlichen ebene Abstützfläche 8 auf. Die zweite Abstützfläche 8 ist parallel zu der ersten Aufstandsfläche 3, wie in Fig. 6 deutlich ersichtlich ist.

Die erste Abstützfläche 7 und die zweite Abstützfläche 8 sind an der Oberseite 9 des Tragblocks 1 ausgebildet. Bevorzugt kann die Oberseite 9 auch als zweite Seite des Tragblocks 1 bezeichnet werden. Die Fig. 2 zeigt die Draufsicht der in Fig. 1 gezeigten bevorzugten Ausführungsform des Tragblocks 1, wobei die Oberseite 9 des Tragblocks 1 ersichtlich ist.

Bevorzugt kann an der Oberseite 9 des Tragblocks 1 lediglich die erste Abstützfläche 7 und die zweite Abstützfläche 8 ausgebildet sein. Dies ist beispielhaft in den Fig. 2, 5, 6 und 7 ersichtlich.

Besonders bevorzugt kann vorgesehen sein, dass der erste Winkel α mindestens 4 Grad, insbesondere mindestens 6 Grad, vorzugsweise mindestens 8 Grad, bevorzugt mindestens 10 Grad, ist. Dadurch kann eine automatische Reinigung der Oberflächen der Solarmodule 2 durch Regen erfolgen, wenn die Solarmodule 2 an der ersten Abstützfläche 7 befestigt werden. Dabei haben Untersuchungen gezeigt, dass die Solarmodule 2 besonders gut ab einer Neigung von 6 Grad gereinigt werden.

Bevorzugt kann der erste Winkel α maximal 20 Grad, insbesondere maximal 15 Grad, vorzugsweise maximal 12 Grad, groß sein.

Der Tragblock 1 weist die zweite im Wesentlichen ebene Aufstandsfläche 10 auf. Die zweite Aufstandsfläche 10 ist an der ersten Querseite 11 ausgebildet. Die erste Querseite 11 kann bevorzugt auch als dritte Seite des Tragblocks 1 bezeichnet werden. In Fig. 4 ist die Rückansicht der in Fig. 1 gezeigten bevorzugten Ausführungsform des Tragblocks 1 ersichtlich, wobei die erste Querseite 11 ersichtlich ist. Weiters ist die zweite Aufstandsfläche 10 auch beispielhaft in Fig. 6 ersichtlich.

Bevorzugt kann an der ersten Querseite 11 lediglich die zweite Aufstandsfläche 10 ausgebildet sein. Dies ist beispielhaft in Fig. 6 gezeigt.

Der Tragblock 1 weist die dritte im Wesentlichen ebene Abstützfläche 13 auf. Die dritte Abstützfläche 13 ist an der zweiten Querseite 14 ausgebildet. Die zweite Querseite 14 kann bevorzugt auch als vierte Seite des Tragblocks 1 bezeichnet werden. In Fig. 3 ist die Vorderansicht der in Fig. 1 gezeigten bevorzugten Ausführungsform des Tragblocks 1 ersichtlich, wobei die zweite Querseite 14 ersichtlich ist. Weiters ist die dritte Abstützfläche 13 auch in der Fig. 6 ersichtlich. Die dritte Abstützfläche 13 ist um den zweiten Winkel β gegenüber der zweiten Aufstandsfläche 10 abgewinkelt. Dies ist beispielhaft in Fig. 2 ersichtlich.

In Fig. 8 ist der zweite Aufstellzustand 12 des Tragblocks 1 ersichtlich, wobei ersichtlich ist, dass der Tragblock 1 mit der zweiten Aufstandsfläche 10 auf der Ebene 6 aufliegt, insbesondere vollflächig aufliegt.

Bevorzugt kann der Tragblock 1 in dem zweiten Aufstellzustand 12 vollflächig auf der zweiten Aufstandsfläche 10 aufliegen. Dies ist beispielsweise in Fig. 8 ersichtlich. Die zweite Aufstandsfläche 10 liegt dabei auf der ersten Ebene 6 auf.

Besonders bevorzugt kann vorgesehen sein, dass sich die dritte Abstützfläche 13 von der Unterseite 4 bis zur Oberseite 9 erstreckt. Dadurch kann eine Fläche für zwei nebeneinander liegende und an dem Tragblock 1 zu befestigende Solarmodule 2 ausgebildet werden.

Besonders bevorzugt kann vorgesehen sein, dass eine vierte im Wesentlichen ebene Abstützfläche 15 an der zweiten Querseite 14 des Tragblocks 1 zum Befestigen des Solarmoduls 2 in einer vierten Anordnung an der vierten Abstützfläche 15 ausgebildet ist, wobei die vierte Abstützfläche 15 parallel zu der zweiten Aufstandsfläche 10 ist. Dadurch kann die horizontale und/oder schräge Befestigung des Solarmoduls 2 in einem aufgestellten Zustand, insbesondere im zweiten Aufstellzustand 12, erleichtert werden. Dies ist beispielhaft in Fig. 2 ersichtlich.

Besonders bevorzugt kann vorgesehen sein, dass sich die vierte Abstützfläche 15 von der Unterseite 4 bis zur Oberseite 9 erstreckt. Dadurch kann eine Fläche für zwei nebeneinander liegende und an dem Tragblock 1 zu befestigende Solarmodule 2 ausgebildet werden.

Bevorzugt kann an der zweiten Querseite 14 des Tragblocks 1 lediglich die dritte Abstützfläche 13 und die vierte Abstützfläche 15 ausgebildet sein. Dies ist beispielhaft in den Fig. 1, 2, 3 und 8 ersichtlich.

Besonders bevorzugt kann vorgesehen sein, dass eine dritte im Wesentlichen ebene Aufstandsfläche 16 an einer dritten der vier Querseiten 17 des Tragblocks 1 ausgebildet ist, wobei die dritte Aufstandsfläche 16 in einem dritten Aufstellzustand 18 des Tragblocks 1 zumindest teilweise auf der Ebene 6 aufliegbar ist, wobei eine fünfte im Wesentlichen ebene Abstützfläche 19 an einer der dritten Querseite 17 gegenüberliegenden und beabstandet zu der dritten Querseite 17 angeordneten vierten Querseite 20 der vier Querseiten des Tragblocks 1 zum Befestigen des Solarmoduls 2 in einer fünften Anordnung an der fünften Abstützfläche 19 ausgebildet ist, wobei die fünfte Abstützfläche 19 um einen dritten Winkel γ gegenüber der dritten Aufstandsfläche 16 abgewinkelt ist, wobei der dritte Winkel γ im Wesentlichen gleich groß wie der erste und der zweite Winkel α, β ist. Dadurch kann die Befestigung unterschiedlich langer Solarmodule 2 erleichtert werden, insbesondere in der im Wesentlichen quaderförmigen Ausbildung des Tragblocks 1. Die dritte Aufstandsfläche 16 und die fünfte Abstützfläche 19 sind in Fig. 2, 4, 9 beispielhaft gezeigt.

Bevorzugt kann die dritte Querseite 17 auch als fünfte Seite des Tragblocks 1 bezeichnet werden.

Bevorzugt kann die vierte Querseite 20 auch als sechste Seite des Tragblocks 1 bezeichnet werden.

In Fig. 5 ist die Seitenansicht von links der in Fig. 1 gezeigten bevorzugten Ausführungsform des Tragblocks 1 gezeigt, wobei die dritte Aufstandsfläche 16 ersichtlich ist.

Bevorzugt kann an der dritten Querseite 17 lediglich die dritte Aufstandsfläche 16 ausgebildet sein. Dies ist beispielhaft in den Fig. 2 und 5 ersichtlich.

Bevorzugt kann der Tragblock 1 in dem dritten Aufstellzustand 18 vollflächig auf der dritten Aufstandsfläche 16 aufliegen. Dies ist beispielsweise in Fig. 9 ersichtlich. Die dritte Aufstandsfläche 16 liegt dabei auf der ersten Ebene 6 auf.

Besonders bevorzugt kann vorgesehen sein, dass eine sechste im Wesentlichen ebene Abstützfläche 21 an der vierten Querseiten 20 des Tragblocks 1 zum Befestigen des Solarmoduls 2 in einer sechsten Anordnung an der sechsten Abstützfläche 21 ausgebildet ist, wobei die sechste Abstützfläche 21 parallel zu der dritten Aufstandsfläche 16 ist. Dadurch kann die Befestigung unterschiedlich langer Solarmodule erleichtert werden, insbesondere in der im Wesentlichen quaderförmigen Ausbildung des Tragblocks 1, in dem der Tragblock 1 durch Drehen lediglich in den für die Länge und Breite des Solarmoduls 2 geeigneten Aufstellzustand 5, 12, 18 gebracht werden muss. Die sechste Abstützfläche 21 ist beispielhaft in den Fig. 2, 3 und 9 ersichtlich.

Bevorzugt kann an der vierten Querseite 20 lediglich die fünfte Abstützfläche 19 und die sechste Abstützfläche 21 ausgebildet sein. Dies ist beispielhaft in den Fig. 2 und 9 ersichtlich.

Besonders bevorzugt kann vorgesehen sein, dass sich die fünfte Abstützfläche 19 von der Unterseite 4 bis zur Oberseite 9 erstreckt.

Besonders bevorzugt kann vorgesehen sein, dass sich die sechste Abstützfläche 21 von der Unterseite 4 bis zur Oberseite 9 erstreckt. Dadurch kann die Befestigung unterschiedlich langer Solarmodule erleichtert werden, insbesondere in der im Wesentlichen quaderförmigen Ausbildung des Tragblocks 1.

Besonders bevorzugt kann vorgesehen sein, dass die maximale Erstreckung des Tragblocks 1 von der Unterseite 4 bis zur Oberseite 9 kleiner als die maximale Erstreckung des Tragblocks 1 von der ersten Querseite 11 bis zur zweiten Querseite 14 ist. Dies ist beispielsweise in Fig. 1 ersichtlich. Dadurch kann bei der Ebene 6 ohne zusätzliche Hilfsmittel durch die unterschiedlichen Aufstellzustände 5, 12, 18 des Tragblocks 1 die schiefe Befestigung des Solarmoduls 2 erleichtert werden.

Besonders bevorzugt kann vorgesehen sein, dass die maximale Erstreckung des Tragblocks 1 von der dritten Querseite 17 bis zur vierten Querseite 20 größer als die maximale Erstreckung des Tragblocks 1 von der Unterseite 4 bis zur Oberseite 9 und kleiner als die maximale Erstreckung des Tragblocks 1 von der ersten Querseite 11 bis zur zweiten Querseite 14 ist. Dadurch können unterschiedliche Höhen an dem Tragblock 1 ausgebildet werden, wodurch auf einfachen Wege unterschiedliche Aufstellmöglichkeiten für unterschiedlich lange Solarmodule 2 ausgebildet werden.

Bevorzugt kann die maximale Erstreckung des Tragblocks 1 von der Unterseite 4 bis zu der Oberseite 9 auch als die Höhe des Tragblocks 1 bezeichnet werden.

Bevorzugt kann die maximale Erstreckung des Tragblocks 1 von der ersten Querseite 11 bis zu der zweiten Querseite 14 auch als Länge des Tragblocks 1 bezeichnet werden.

Bevorzugt kann die maximale Erstreckung des Tragblocks 1 von der dritten Querseite 17 bis zu der vierten Querseite 20 auch als Breite des Tragblocks 1 bezeichnet werden.

Bevorzugt kann die Länge des Tragblocks 1 mindestens das 1,2-Fache, insbesondere mindestens das 1,3-Fache, vorzugsweise mindestens das 1,4-Fache, der Breite des Tragblocks 1 sein.

Bevorzugt kann die Länge des Tragblocks 1 mindestens das 1,5-Fache, insbesondere mindestens das 1,9-Fache, vorzugsweise mindestens das 2,2-Fache, der Höhe des Tragblocks 1 ist.

Bevorzugt kann die Breite des Tragblocks 1 mindestens das 1,2-Fache, insbesondere mindestens das 1,4-Fache, vorzugsweise mindestens das 1,6-Fache, der Höhe des Tragblocks 1 sein.

Bevorzugt kann die Länge des Tragblocks 1 maximal das 2-Fache, insbesondere maximal das 1,7-Fache, vorzugsweise maximal das 1,5-Fache, der Breite des Tragblocks 1 sein.

Bevorzugt kann die Länge des Tragblocks 1 maximal das 3-Fache, insbesondere maximal das das 2,6-Fache, vorzugsweise maximal das 2,3-Fache, der Höhe des Tragblocks 1 sein.

Bevorzugt kann die Breite des Tragblocks 1 maximal das 2,2-Fache, insbesondere maximal das 1,8-Fache, vorzugsweise maximal das 1,6-Fache, der Höhe des Tragblocks 1 sein.

Bevorzugt kann der Tragblock 1 mindestens 250 mm, insbesondere mindestens 300 mm, vorzugsweise mindestens 320 mm, lang sein.

Bevorzugt kann der Tragblock 1 mindestens 150 mm, insbesondere mindestens 200 mm, vorzugsweise mindestens 220 mm, breit sein.

Bevorzugt kann der Tragblock 1 mindestens 80 mm, insbesondere mindestens 100 mm, vorzugsweise mindestens 120 mm, hoch sein.

Bevorzugt kann der Tragblock 1 maximal 1000 mm, insbesondere maximal 700 mm, vorzugsweise maximal 500 mm, lang sein.

Bevorzugt kann der Tragblock 1 maximal 600 mm, insbesondere maximal 500 mm, vorzugsweise maximal 400 mm, breit sein.

Bevorzugt kann der Tragblock 1 maximal 250 mm, insbesondere maximal 220 mm, vorzugsweise maximal 190 mm, hoch sein.

Eine bevorzugte Ausführungsform des Tragblocks 1 kann beispielsweise 340 mm lang, 240 mm breit und 150 mm hoch sein.

Besonders bevorzugt kann vorgesehen sein, dass der Tragblock 1 eine Ausnehmung zum Greifen des Tragblocks 1 umfasst. Bevorzugt kann der Tragblock 1 wenigstens eine Ausnehmung zum Greifen des Tragblocks 1 umfassen. Bevorzugt können auch wenigstens zwei, oder insbesondere zwei, Ausnehmungen zum Greifen an dem Tragblock 1 ausgebildet sein. Bevorzugt kann die Ausnehmung als Griffnische bezeichnet werden. Dadurch kann das Greifen des Tragblocks 1 und der Transport des Tragblocks 1 zu dem Aufstellort erleichtert werden.

Bevorzugt kann die Ausnehmung an der Unterseite 4 des Tragblocks 1 ausgebildet sein.

Bevorzugt kann die Ausnehmung an der ersten Querseite 11 und/oder an der dritten Querseite 17 ausgebildet sein.

Bevorzugt kann die Ausnehmung an einer Aufstandsfläche 3, 10, 16, insbesondere der ersten Aufstandsfläche 3, der zweiten Aufstandsfläche 10 und/oder der dritten Aufstandsfläche 16, ausgebildet sein.

Erfindungsgemäß ist vorgesehen, dass der erste Winkel α im Wesentlichen gleich groß wie der zweite Winkel β ist. Der erste Winkel α ist dabei zwischen der ersten Abstützfläche 7 und der ersten Aufstandsfläche 3 eingeschlossen. Der zweite Winkel β ist dabei zwischen der dritten Abstützfläche 13 und der zweiten Aufstandsfläche 10 eingeschlossen. Bevorzugt kann der dritte Winkel γ im Wesentlichen gleich groß sein, wie der erste Winkel α und der zweite Winkel β. Der dritte Winkel γ ist dabei zwischen der fünften Abstützfläche 19 und der dritten Aufstandsfläche 16 eingeschlossen.

Der erfindungsgemäße Tragblock 1 weist drei Aufstellzustände, den ersten Aufstellzustand 5, den zweiten Aufstellzustand 12 und den dritten Aufstellzustand 18 auf.

In dem ersten Aufstellzustand 5 kann das Solarmodul 2 in zwei Anordnungen an dem Tragblock 1 zumindest mittelbar befestigt werden. Dabei kann das Solarmodul 2 in der ersten Anordnung an der ersten Abstützfläche 7 und in der zweiten Anordnung das Solarmodul 2 an der zweiten Abstützfläche 8 zumindest mittelbar befestigt werden. Die Flächen für die unterschiedlichen Anordnungen in dem ersten Aufstellzustand 5 sind beispielhaft in Fig. 7 ersichtlich. Durch diese zwei Anordnungen in dem ersten Aufstellzustand 5 kann beispielsweise auf einer horizontalen Ebene 6 eine horizontale Befestigung des Solarmoduls 2 mittels der zweiten Abstützflächen 8 von vier Tragblöcken 1 ausgebildet werden.

In dem zweiten Aufstellzustand 12 kann das Solarmodul 2 bevorzugt ebenfalls in zwei Anordnungen zumindest mittelbar an dem Tragblock 1 befestigt werden. Bevorzugt kann das Solarmodul 2 in der dritten Anordnung an der dritten Abstützfläche 13 und in der vierten Anordnung an der vierten Abstützfläche 15 zumindest mittelbar befestigt werden. Die Flächen für die unterschiedlichen Anordnungen in dem zweiten Aufstellzustand 12 sind beispielhaft in Fig. 8 ersichtlich.

In dem dritten Aufstellzustand 18 kann das Solarmodul 2 bevorzugt ebenfalls in zwei Anordnungen zumindest mittelbar an dem Tragblock 1 befestigt werden. Bevorzugt kann das Solarmodul 2 in der fünften Anordnung an der fünften Abstützfläche 19 und in der sechsten Anordnung an der sechsten Abstützfläche 21 zumindest mittelbar befestigt werden. Die Flächen für die unterschiedlichen Anordnungen in dem dritten Aufstellzustand 18 sind beispielhaft in Fig. 9 ersichtlich.

Durch die unterschiedlichen Anordnungsmöglichkeiten des Solarmoduls 2 an dem Tragblock 1 kann der Tragblock 1 zum Befestigen von unterschiedlich langen und breiten Solarmodule 2 verwendet werden. Dabei kann für die Befestigung einerseits der Abstand der Tragblöcke 1 zueinander sowie andererseits der Aufstellzustand 5, 12, 18 des Tragblocks 1 gewählt werden, wodurch die Befestigung des Solarmoduls 2 an dem Tragblock 1 erleichtert wird.

In Fig. 11 ist dabei ersichtlich, dass ein Tragblock 1 in den zweiten Aufstellzustand 12 und ein Tragblock 1 in dem ersten Aufstellzustand 5 gebracht sind, wodurch eine schräge Befestigung des Solarmoduls 2 auf einer horizontalen Ebene 6 einfach ausgebildet werden kann. Es wird darauf hingewiesen, dass in diesem Solarmodulaufbau 23 zwei Tragblöcke 1 in dem zweiten Aufstellzustand 12 und zwei Tragblöcke 1 in dem ersten Aufstellzustand 5 aufgestellt sind, wobei aufgrund der Seitenansicht jeweils lediglich ein Tragblock 1 in einem Aufstellzustand 5, 12 ersichtlich ist.

In Fig. 12 ist dabei ersichtlich, dass ein Tragblock 1 in den dritten Aufstellzustand 12 und ein Tragblock 1 in dem ersten Aufstellzustand 5 gebracht sind, wodurch ebenfalls eine schräge Befestigung des Solarmoduls 2 auf einer horizontalen Ebene 6 einfach ausgebildet werden kann. Im Unterschied zu Fig. 11 sind die beiden Trageblöcke 1 näher zueinander angeordnet, da die Breite kleiner ist als die Länge. Dadurch kann auch ein kürzeres Solarmodul 2 zuverlässig befestigt werden. Durch die Wahl des Aufstellungszustandes 5, 12, 18 kann daher der Solarmodulaufbau 23 an die entsprechende Länge des Solarmoduls 2 angepasst werden.

Im Vergleich zu Fig. 11 und 12 sind in Fig. 13 zwei Tragblöcke 1 im ersten Aufstellzustand 5 ersichtlich. Dadurch kann besonders einfach eine schräge Befestigung des Solarmoduls 2 auf einer schrägen Ebene 6, insbesondere die unter dem Winkel θ geneigte Ebene 6, ausgebildet werden.

Unter der erfindungsgemäßen ebenen Fläche ist eine gleichmäßig flache und glatte Fläche zu verstehen. Die Fläche weist daher keine aufstehenden hügelartigen Fortsätze oder muldenartige Vertiefungen auf. Unter im Wesentlichen eben ist die im Bereich der Fertigung des Tragblocks 1 liegende Unregelmäßigkeit zu verstehen.

Die Abstützflächen 7, 8, 13, 15, 19, 21 und die Aufstandsflächen 3, 10, 16 sind bevorzugt durchgehende Flächen und werden bevorzugt nicht durch miteinander wirkende Teilflächen gebildet.

Die erfindungsgemäße Abstützfläche 7, 8, 13, 15, 19, 21 ist eine Fläche, welche das Solarmodul 2 abstützt. An dieser Fläche wird das Solarmodul 2 abgestützt, insbesondere befestigt. Die Befestigung des Solarmoduls 2 an der jeweiligen Abstützfläche 7, 8, 13, 15, 19, 21 kann direkt erfolgen, wie beispielsweise mittels Schrauben, oder dergleichen, oder mittels einer Befestigungsvorrichtung, wie beispielsweise einer Klammer oder dergleichen.

Nachfolgend werden Grundsätze für das Verständnis und die Auslegung gegenständlicher Offenbarung angeführt.

Unter Kilogramm (kg) ist das metrische Maß zu verstehen.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Ein "im Wesentlichen" in Verbindung mit einem Zahlenwert mitumfasst eine Toleranz von ± 10% um den angegebenen Zahlenwert, sofern es sich aus dem Kontext nicht anders ergibt.

Bei Wertebereichen sind die Endpunkte mitumfasst, sofern es sich aus dem Kontext nicht anders ergibt.

## Patentansprüche

1. Tragblock (1) einer Unterkonstruktion für ein Solarmodul (2), umfassend
- eine erste im Wesentlichen ebene Aufstandsfläche (3) an einer Unterseite (4) des Tragblocks (1), wobei die erste Aufstandsfläche (3) in einem ersten Aufstellzustand (5) des Tragblocks (1) zumindest teilweise auf einer Ebene (6) aufliegbar ist,
- eine erste im Wesentlichen ebene Abstützfläche (7) und eine zweite im Wesentlichen ebene Abstützfläche (8) an einer der Unterseite (4) gegenüberliegend und beabstandet zu der Unterseite (4) angeordneten Oberseite (9) des Tragblocks (1) zum Befestigen des Solarmoduls (2) in einer ersten Anordnung an der ersten Abstützfläche (7) oder in einer zweiten Anordnung an der zweiten Abstützfläche (8), wobei die zweite Abstützfläche (8) parallel zu der ersten Aufstandsfläche (3) ist, wobei die erste Abstützfläche (7) um einen ersten Winkel (α) gegenüber der ersten Aufstandsfläche (3) abgewinkelt ist,
- eine zweite im Wesentlichen ebene Aufstandsfläche (10) an einer ersten von vier Querseiten (11) des Tragblocks (1), wobei die zweite Aufstandsfläche (10) in einem zweiten Aufstellzustand (12) des Tragblocks (1) zumindest teilweise auf der Ebene (6) aufliegbar ist,
- eine dritte im Wesentlichen ebene Abstützfläche (13) an einer der ersten Querseite (11) gegenüberliegenden und beabstandet zu der ersten Querseite (11) angeordneten zweiten Querseite (14) der vier Querseiten des Tragblocks (1) zum Befestigen des Solarmoduls (2) in einer dritten Anordnung an der dritten Abstützfläche (13), wobei die dritte Abstützfläche (13) um einen zweiten Winkel (β) gegenüber der zweiten Aufstandsfläche (10) abgewinkelt ist,
wobei der erste Winkel (α) im Wesentlichen gleich groß wie der zweite Winkel (β) ist.

2. Tragblock (1) nach Anspruch 1, **dadurch gekennzeichnet, dass** die maximale Erstreckung des Tragblocks (1) von der Unterseite (4) bis zur Oberseite (9) kleiner als die maximale Erstreckung des Tragblocks (1) von der ersten Querseite (11) bis zur zweiten Querseite (14) ist.

3. Tragblock (1) nach Anspruch 1 oder 2, **dadurch gekennzeichnet, dass** der erste Winkel (α) mindestens 4 Grad, insbesondere mindestens 6 Grad, vorzugsweise mindestens 8 Grad, bevorzugt mindestens 10 Grad, ist.

4. Tragblock (1) nach einem der Ansprüche 1 bis 3, **dadurch gekennzeichnet, dass** der Tragblock (1) einstückig ausgebildet ist.

5. Tragblock (1) nach einem der Ansprüche 1 bis 4, **dadurch gekennzeichnet, dass** der Tragblock (1) im Wesentlichen quaderförmig ausgebildet ist.

6. Tragblock (1) nach einem der Ansprüche 1 bis 5, **dadurch gekennzeichnet, dass** der Tragblock (1) aus Beton ist.

7. Tragblock (1) nach einem der Ansprüche 1 bis 6, **dadurch gekennzeichnet, dass** sich die dritte Abstützfläche (13) von der Unterseite (4) bis zur Oberseite (9) erstreckt.

8. Tragblock (1) nach einem der Ansprüche 1 bis 7, **dadurch gekennzeichnet, dass** eine vierte im Wesentlichen ebene Abstützfläche (15) an der zweiten Querseite (14) des Tragblocks (1) zum Befestigen des Solarmoduls (2) in einer vierten Anordnung an der vierten Abstützfläche (15) ausgebildet ist, wobei die vierte Abstützfläche (15) parallel zu der zweiten Aufstandsfläche (10) ist

9. Tragblock (1) nach Anspruch 8, **dadurch gekennzeichnet, dass** sich die vierte Abstützfläche (15) von der Unterseite (4) bis zur Oberseite (9) erstreckt.

10. Tragblock (1) nach einem der Ansprüche 1 bis 9, **dadurch gekennzeichnet, dass** eine dritte im Wesentlichen ebene Aufstandsfläche (16) an einer dritten der vier Querseiten (17) des Tragblocks (1) ausgebildet ist, wobei die dritte Aufstandsfläche (16) in einem dritten Aufstellzustand (18) des Tragblocks (1) zumindest teilweise auf der Ebene (6) aufliegbar ist, wobei eine fünfte im Wesentlichen ebene Abstützfläche (19) an einer der dritten Querseite (17) gegenüberliegenden und beabstandet zu der dritten Querseite (17) angeordneten vierten Querseite (20) der vier Querseiten des Tragblocks (1) zum Befestigen des Solarmoduls (2) in einer fünften Anordnung an der fünften Abstützfläche (19) ausgebildet ist, wobei die fünfte Abstützfläche (19) um einen dritten Winkel (γ) gegenüber der dritten Aufstandsfläche (16) abgewinkelt ist, wobei der dritte Winkel (γ) im Wesentlichen gleich groß wie der erste und der zweite Winkel (α, β) ist.

11. Tragblock (1) nach Anspruch 10, **dadurch gekennzeichnet, dass** eine sechste im Wesentlichen ebene Abstützfläche (21) an der vierten Querseiten (20) des Tragblocks (1) zum Befestigen des Solarmoduls (2) in einer sechsten Anordnung an der sechsten Abstützfläche (21) ausgebildet ist, wobei die sechste Abstützfläche (21) parallel zu der dritten Aufstandsfläche (16) ist

12. Tragblock (1) nach Anspruch 11, **dadurch gekennzeichnet, dass** sich die sechste Abstützfläche (21) von der Unterseite (4) bis zur Oberseite (9) erstreckt.

13. Tragblock (1) nach einem der Ansprüche 1 bis 9 und 10 bis 12, **dadurch gekennzeichnet, dass** die maximale Erstreckung des Tragblocks (1) von der dritten Querseite (17) bis zur vierten Querseite (20) größer als die maximale Erstreckung des Tragblocks (1) von der Unterseite (4) bis zur Oberseite (9) und kleiner als die maximale Erstreckung des Tragblocks (1) von der ersten Querseite (11) bis zur zweiten Querseite (14) ist.

14. Tragblock (1) nach einem der Ansprüche 1 bis 13, **dadurch gekennzeichnet, dass** der Tragblock (1) eine Ausnehmung (22) zum Greifen des Tragblocks (1) umfasst.

15. Solarmodulaufbau (23) umfassend mindestens vier Tragblöcke (1) nach einem der Ansprüche 1 bis 14 und wenigstens ein Solarmodul (2), wobei das wenigstens eine Solarmodul (2) zumindest mittelbar an den mindestens vier Tragblöcke (1) befestigt ist.
